# EUROPÄISCHE PATENTSCHRIFT

(11) **EP 1 251 491 B1**
(45) Veröffentlichungstag und Bekanntmachung des Hinweises auf die Patenterteilung: **30.11.2005**
(21) Anmeldenummer: 02100391.8
(22) Anmeldetag: 18.04.2002
(51) Int. Cl.: G10L 15/26

(54) **Verfahren zum Ermitteln von Datenbankeinträgen durch Spracheingabe**
Method for querying database records by speech input
Procédé d'interrogation d'enregistrements de base de données par la parole

(30) Priorität: 20.04.2001 DE 10119677
(43) Veröffentlichungstag der Anmeldung: 23.10.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Krass, Stefanie, c/o Philips Corp. Int. Prop. GmbH, 52066, Aachen (DE); Hodam, Henrik, c/o Philips Corp. Int. Prop. GmbH, 52066, Aachen (DE)
(74) Vertreter: Volmer, Georg

(56) Entgegenhaltungen:
- US-A- 5 758 322
- US-A- 5 940 793
- ANONYMOUS: "Dynamic Modification of the Vocabulary of a Speech Recognition Machine" IBM TECHNICAL DISCLOSURE BULLETIN, Bd. 27, Nr. 7A, 1. Dezember 1984 (1984-12-01), Seiten 3945-3946, XP002258750 New York, US

## Beschreibung

Die Erfindung betrifft ein Verfahren zum Ermitteln von Datenbankeinträgen einer Datenbank mittels eines automatischen Dialogsystems.

Um einen autormatischen Betrieb des Dialogsystems zu gewährleisten, wird üblicherweise ein automatischer Spracherkenner verwendet, der auf ein Lexikon mit Lexikoneinträgen (Vokabular des Spracherkenners) zugreift und auf der Basis von Hidden Markov Modellen arbeitet. Die Lexikoneinträge enthalten akustische Referenzen für den Spracherkenner, die bei einer Spracherkennungsprozedur mit Spracheingabe verglichen werden. Die akustischen Referenzen repräsentieren beispielsweise Abfolgen von Phonemen. Das erfibdungsgemäße Verfahren betrifft beispielsweise einen "Gelbe-Seiten-Service" ("Yello-Page-Service"). Mittels eines solchen Service kann sich jeder Nutzer über mögliche Anbieter einer gewünschten Branche, beispielsweise Ärzte, Handwerker oder sonstige Firmen, aber auch über öffentliche Einrichtungen wie Polizeidienststellen, Schwimmbäder, Schulen etc. informieren. Am bekanntesten sind derartige Branchen-Auskunftssysteme über das Telefon, d h in Form von spezialisierten Fersprechauskünften. Darüber hinaus gibt es aber auch bereits derartige Auskunftssysteme in Datennetzen, beispielsweise im Internet oder in Intranets. Bei den Endgeräten handelt es sich je nach Art des Auskunftssystems entweder um ein Telefon, ein Mobilfunkgerät, einen Computer oder einen Organizer etc. mit einer entsprechenden Telefonfunktion oder - bei Verwendung eines Auskunftssystems in einem reinen Datennetz - um PC's oder Organizer oder Mobilfunkgeräte mit entsprechenden Zugriffsmöglichkeiten auf das jeweilige Netz, beispielsweise WAP-Handys. Bei den Suchparametem handelt es sich um verschiedene Suchkriterien, z. B. die Branche, den Spezialbereich oder den Ort bzw um die jeweils zugehörigen Suchbegriffe, z B. "Ärzte" oder "Homöopathie" oder "München". Bei den Teilnehmerdaten kann es sich beispielsweise um die Telefonnummer, die Adresse oder eine sonstige Information handeln, die es dem Nutzer ermöglicht, mit dem jeweiligen am Auskunftssystem teilnehmenden, d. h. in der Datenbank des Auskunftssystems aufgenommenen Anbieter in Kontakt zu treten bzw zu dem jeweiligen Anbieter zu gelangen. Bei bekannten Systemen wird für bestimmte Kategorien von Spracheingaben, wie beispielsweise die Eingabe einer Branche, ein auf diese Anforderung an den Spracherkenner zugeschnittenes Lexikon verwendet, um den Rechenaufwand zu begrenzen. Dabei tritt das Problem auf, dass die anschließend für das ermittelte Spracherkennungsergebnis durchgeführte Datenbankabfrage keinen zugehörigen Datenbankeintrag findet, der an den Benutzer ausgegeben werden kann.

Der Erfindung liegt die Aufgabe zugrunde, dem genannten Problem mit möglichst wenig zusätzlichem Rechenaufwand entgegenzuwirken, wobei der Komfort für den Benutzer möglichst nicht beeinträchtigt werden soll.

Die Aufgabe wird bei dem eingangs genannten Verfahren durch die folgenden Merkmale gelöst:
1.1 Zwischenspeicherung einer Spracheingabe,
1.2 Verarbeitung der Sprachäußerung mittels eines automatischen Spracherkenners und Erzeugung eines Spracherkennungsergebnisses unter Verwendung eines ersten Lexikons, das einen ersten Satz von Lexikoneinträgen aufweist, wobei ein Lexikoneintrag jeweils mindestens eine akutische Referenz enthält,
1.3 Suche nach einem zum Spracherkennungsergebnis korrespondierenden Datenbankeintrag,
1.4 für den Fall, dass in Schritt 1.3 kein Datenbankeintrag gefunden wurde,
   - Anpassung des ersten Lexikons, so dass das erste Lexikon einen zweiten Satz von Lexikoneinträgen aufweist, der sich bezüglich mindestens eines Lexikoneintrags vom ersten Satz von Lexikoneinträgen unterscheidet,
   - Wiederholung der Schritte 1.2 und 1.3 unter Verwendung der zwischengespeicherten Sprachäußerung und des angepassten ersten Lexikons.

Der Benutzer muss auch bei einer im ersten Anlauf nicht erfolgreichen Datenbankanfrage seine durch eine Sprachäußerung getätigte Sprachangabe nicht wiederholen. Die zwischengespeicherte Spracheingabe wird für einen erneuten Spracherkennungsvorgang mit einem angepassten Lexikon verwendet. Das Lexikon wird dynamisch angepasst. Die Strategie zur Anpassung des Lexikons kann so gewählt werden, dass mit möglichst kleinem Lexikon eine möglichst große Wahrscheinlichkeit für die erfolgreiche Zuordnung eines Datenbankeintrags zum jeweiligen Spracherkennungsergebnis gewährleistet wird.

Insbesondere wird ein Gesamt-Lexikon verwendet, dessen Lexikoneinträge bei der Anpassung des ersten Lexikons verwendet werden können (Anspruch 2).

Anspruch 3 gewährleistet, dass das erfindungsgemäße Verfahren bei Spracheingaben von sehr schlechter Qualität und beim Fehlen von zuordenbaren Datenbankeinträgen nach einem vorgebbaren Kriterium abgebrochen wird.

Anspruch 4 und 5 beschreiben Ausführungsformen, bei denen die Lexikoneinträge des für die Spracherkennung verwendeten ersten Lexikons in Zusammenhang mit einer Kategorie von Datenbankeinträgen stehen. Bei der Anpassung des Lexikons nach Anspruch 4 werden im Rahmen dieser Kategorie von Datenbankeinträgen (beispielsweise einer Branche) entweder zusätzliche Lexikoneinträge hinzugenommen oder aber es werden Lexikoneinträge ausgetauscht. Anspruch 5 zeigt eine Ausführungsvariante, bei im Rahmen der Anpassung des ersten Lexikons Lexikoneinträge kategorieübergreifend angepasst werden. Enthält das erste Lexikon vor einer Anpassung zu einer bestimmten Kategorie von Datenbankeinträgen gehörige Lexikoneinträge, so enthält das erste Lexikon dann nach der Anpassung mindestens einen zu einer verwandten Kategorie gehörigen Lexikoneintrag (z B. aus einer verwandten Branche).

Im der Ausführungsvariante nach Anspruch 6 ist für den Fall, dass einer Spracheingabe kein Datenbankeintrag zugeordnet werden konnte, eine Anpassung des Lexikons nicht nur für eine einzige Spracherkennungsergebnisalternative vorgesehen, sondern bei der Anpassung des Lexikons werden auch Spracherkennungsalternativen berücksichtigt. Die Wahrscheinlichkeit, dass bei einem erneuten Spracherkennungsvorgang für die zwischengespeicherte Spracheingabe nunmehr ein Datenbankeintrag zugeordnet werden kann, wird auf diese Weise erhöht.

Das erfindungsgemäße Verfahren wird insbesondere zur Ermittlung von Einträgen einer Gelbe-Seiten-Datensammlung verwendet (Anspruch 7), wobei der Zugriff auf das Dialogsystem insbesondere über eine Telefonschnittstelle erfolgt (Anspruch 8).
Die Erfindung bezieht sich auch auf ein automatisches Dialogsystem, das zur Durchführung des erfindungsgemäßen Verfahrens eingesetzt wird.

Ausführungbeispiele der Erfindung werden nachfolgend anhand der Zeichnungen näher beschrieben. Es zeigen:
Fig 1 ein Blockschaltbild eines Dialogsystems und
Fig. 2 ein Flussdiagramm zur Erläuterung des erfindungsgemäßen Verfahrens.

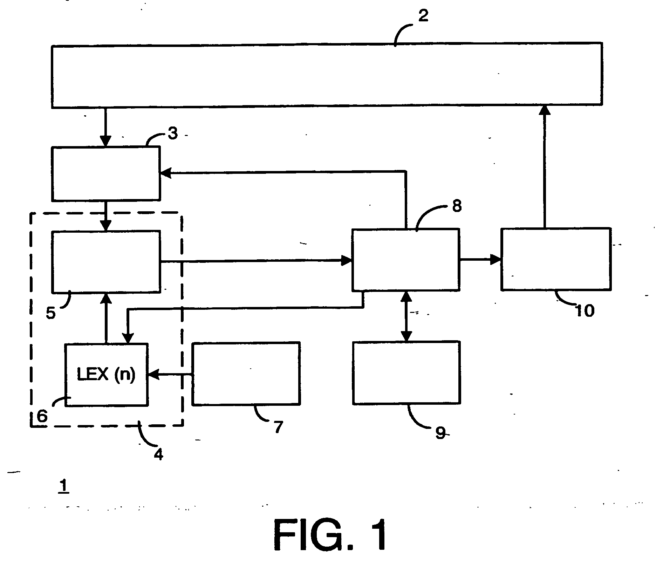

Fig. 1 zeigt ein Dialogsystem 1 mit einer hier als Telefonschnittstelle ausgeführten Schnittstelle 2. Mittels der Schnittstelle 2 ist das Dialogsystem 1 mit einem Telefonnetz gekoppelt, gegebenenfalls über eine Nebenstellenanlage. Es ist ein Speicher 3 vorgesehen, mittels dessen empfangene Spracheingaben als Sound-Datei zwischengespeichert werden. Ein automatischer spracherkenner 4 dient zur automatischen Erkennung der im Speicher 3 abgelegten Spracheingaben. Der Spracherkenner 4 enthält ein Spracherkennungsmodul 5 und ein Lexikon 6, dessen Lexikoneinträge das für den Spracherkenner 4 vafügbare Vokabular darstellen.Jeder Lexikoneintrag enthält mindestens eine ein Wort- oder einen Wortbestandteil beschreibende akustische Referenz. Jede akustische Referenz entspricht dabei einem Hidden - Markov - Modell (HMM) mit mindestens einem Zustand. Das Spracherkennungsmodul 5 umfasst hier alle Funktionen des Spracherkenners 4 mit Ausnahme des Lexikons 6. Der Spracherkenner 4 kann bspw mit dem System "Speech Pearl" der Firma Philips realisiert werden.

Bei den erfindungsgemäßen Dialogsystemen 1 ist das vom Spracherkenner 4 verwendete Lexikon 6 nicht fest, sondern dynamisch anpassbar. Im vorliegenden Beispiel stellen die Lexikoneinträge des Lexikons 6 eine Teilmenge eines Gesamt-Lexikons 7 dar. Das Gesamt-Lexikon 7 stellt ein Reservoir an Lexikoneinträgen für das Lexikon 6 dar. Eine zentrale Dialogkontroll- und Steuereinheit 8 dient zur Kontrolle eines Dialogs mit einem Benutzer und steuert außerdem die Anpassung des Lexikons 6. Die Einheit 8 hat Zugriff auf eine mit ihr gekoppelte Datenbank 9 mit anwendungsspezifischen Daten und steuert eine Sprachausgabeeinheit 10, mittels derer Sprachausgaben generiert und über die Schnittstelle 2 an den Benutzer ausgegeben werden.
Durch die in der Datenbank 9 abgelegten anwendungsspezifischen Daten sind für die jeweilige Anwendung vorgebbare Dialogstrukturen festgelegt. So kann bspw. ein Dialog mit einem Benutzer mit einer Begrüßung und einer anschließenden Aufforderung zur Tätigung einer bestimmten Spracheingabe beginnen. Eine darauf folgende Spracheingabe durch den Benutzer wird über die Schnittstelle 2 empfangen und in dem Speicher 3 zwischengespeichert. Die zwischengespeicherte Spracheingabe 3 wird mittels des automatischen Spracherkenners 4 in ein Spracherkennungsergebnis umgesetz, dass der Einheit 8 zugeführt wird, die dann in Abhängigkeit von dem Spracherkennungsergebnis den Dialog mit dem Benutzer entweder in vorgegebener Weise entsprechend in der Datenbank 9 abgelegter Daten fortsetzt oder aber den Dialog beendet.

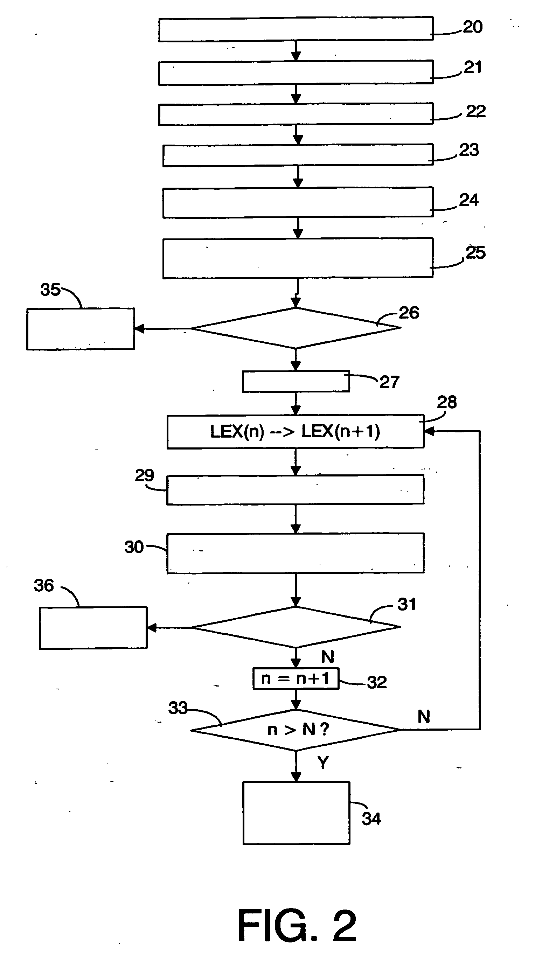

Fig2 zeigt zur weiteren Erläuterung der Erfindung ein Flussdiagramm. Die Erfindung soll hier am Beispiel eines Zugriffs auf eine Gelbe -Seiten -Datensammlung beschrieben werden, bei der ein Benutzer Brancheninformationen abrufen kann. Die Brancheninformationen sind hier auch in der Datenbank 9 abgelegt und enthalten bspw. für eine Vielzahl von Unternehmensnamen jeweils eine Orstsangabe, die zugehörige Branche, einen Straßennamen, eine Telefonnummer und eine Postleitzahl. Nach dem Zugriff eines Benutzers auf das Dialogsystem 1 durch Tätigung eines Telefonanrufs gibt das Dialogsystem 1 eine Begrüßungsformel an den Benutzer aus und bittet um Eingabe eines Städtenamens. Nach der Eingabe eines Städtenamens, der in Schritt 20 nichtig erkannt wird, wird der Benutzer in Schritt 21 zur Eingabe einer Branche aufgefordert. Nach der Eingabe einer Branche mittels Spracheingabe in Schritt 22 wird in Schritt 23 diese Spracheingabe als Sound-Datei im Speicher 3 zwischengespeichert. Anschließend wird in Schritt 24 eine Spracherkennungsprozedur für die zwischengespeicherte Spracheingabe mittels des Spracherkenners 4 durchgeführt. Dabei wird ein Lexikon LEX (1) verwendet, dass eine eingeschrarke Menge an Branchennamen repräsentiert, dh vom Spracherkenner in diesem Schritt 24 verwendete Vokabular ist entsprechend eingeschränkt. Mit dem in Schritt 24 erzeugten Spracherkennungsergebnis wird in dem nachfolgenden Schritt 25 mittels der Dialogkontroll-/Steuereinheit 8 eine Datenbankanfrage an die Datenbank 9 durchgeführt, wobei versucht wird, zu dem erkannten Branchennamen und zu der erkannten Stadt in der Datenbank 9 abgelegte Unternehmensnamen zu finden. Wird in Schritt 26 festgestellt, dass mindestens ein zu dem erkannten Branchennamen gehöriger Datenbankeintrag gefunden wurde, werden in Schritt 35 entweder dem Benutzer die entsprechenden Unternehmensnamen und gegebenenfalls weitere zugehörige Unternehmensinformationen durch Sprachausgabe oder mitgeteilt oder der Dialog mit dem Benutzer wird mit einer Sprachausgabe fortgesetzt, mit der der Benutzer zur genaueren Spezifizierung der gewünschten Information aufgefordert wird (dies könnte beispielsweise durch Eingabe einer Postleitzahl oder eines Straßennamens geschehen). Wird in Schritt 26 dagegen festgestellt, dass kein zu der erkannten Stadt und dem erkannten Branchennamen gehöriger Datenbankeintrag in der Datenbank 9 gefunden wurde, wird in Schritt 27 ein Parameter n, der zur Bezeichnung der in der vorhergehenden Spracherkennungsprozedur verwendeten Version des Lexikons 6 dient, auf n=1 gesetzt. In Schritt 28 erfolgt daraufhin eine Anpassung des Lexikons 6, wobei die Lexikonversion LEX (n) in die Lexikonversion LEX (n+1) übergeht, die sich in mindestens einem Lexikoneintrag von der Lexikonversion LEX(n) unterscheidet. Die Lexikonversion LEX (n) enthält gegenüber der Lexikonversion LEX (n+1) eine eingeschränkte Menge an Branchennamen repräsentierenden Lexikoneinträgen, wobei mit größer werdendem n auch zusätzliche nicht so häufig abgefragte Branchennamen in Betracht gezogen werden. Die Erweiterung des Lexikons wird durch in der Datenbank 9 abgelegten Zuordnungstabellen festgelegt.

Die Anpassung des Lexikons kann, wenn die verfügbaren Lexikoneinträge des Gesamt-Lexikons 7 in Kategorien eingeteilt sind, kategorieintem und/oder kategorieübergreifend erfolgen. Ein Beispiel für eine bestimmte Kategorie von Lexikoneinträgen ist beispielweise die Menge an Branchennamen für eine bestimmte Stadt. Eine kategorieinterne Anpassung des Lexikons wäre dann gegeben, wenn dieser Stadt zugeordnete andere und/oder zusätzliche Branchennamen für die Bildung des Lexikons 6 in Betracht gezogen werden. Bei einer kategorieübergreifenden Anpassung des Lexikons würde in diesem Beispiel bei der Anpassung des Lexikons auch eine Berücksichtigung von anderen Städten zugeordnete Branchennamen erfolgen, z B. für in der Umgebung der erkannten Stadt liegenden Städte. Auch in diesem Fall sind die Zuordnungen in der Datenbank 9 abgelegte Zuordnungstabellen festgelegt. Grundsätzlich sind eine Vielzahl von Kategorien möglich, die sich aus der jeweiligen Anwendung und den Anforderungen für die Anpassung des Lexikons ergsben und hierfür optimiert werden.

Nach der Anpassung des Lexikons in Schritt 28 wird in Schritt 29 eine Spracherkennung unter Verwendung des angepassten Lexikons LEX(n+1) durchgeführt. Mit dem ermittelten Spracherkennungsergebnis, dass eine erkannte Branche repräsentiert und mit der im vorhinein erkannten Stadt wird nun wiederum durch die Dialogkontroll-/Steuereinheit 8 eine Datenbankanfrage an die Datenbank 9 durchgeführt. Wird in Schritt 31 festgestellt, dass die Datenbankanfrage Einträge (Branchennamen) zu der erkannten Stadt liefert, wird das Verfahren mit Schritt 36, der Maßnahmen zur Aufgabe von Daten wie Schritt 35 enthält, fortgesetzt.

Wird in Schritt 31 festgestellt, dass wiederum kein Datenbankeintrag zugeordnet werden konnte, wird in Schritt 32 der Parameter n um den Wert 1 inkrementiert. In Schritt 33 wird überprüft, ob ein Abbruchkriterium erfüllt ist. Im vorliegenden Fall wird das Abbruchkriterium durch eine Zahl N repräsentiert, die a priori festgelegt wurde. Die Zahl N repräsentiert dabei die Anzahl an gewünschten Anpassungen des Lexikons. Ist nun das Abbruchkriterium in Schritt 33 noch nicht erfüllt (n ≤ N), erfolgt ein Rücksprung nach Schritt 28. Wird in Schritt 33 festgestellt, dass das Abbruchkriterium erfüllt ist, dh n > N, wird die Bearbeitung der Benutzereingabe durch das Dialogsystem 1 abgebrochen. Im vorliegenden Fall erfolgt ein Abbruch des Dialogs zwischen dem Dialogsystem 1 und dem Benutzer und außerdem wird der Benutzer in einem Schritt 34 an einen Telefonisten bzw. eine Telefonistin weiterveibunden, um dem Benutzer auf diesem Weg die gewünschten Daten zugänglich zu machen.

In einer Ausgestaltung der Erfindung liefert der Spracheckenner 1 nicht nur ein einzelnes Sprachekennungsergebnis, sondern eine Menge N bester Erkennungsergebnisalternativen mit N ≥ 1. In diesem Fall hängt die Anpassung des Lexikons 6 von ein oder mehreren vom Spracherkenner 4 gelieferten Erkennungsepgebnisalternativen ab. So kann der Spracherkenner 6 bspw. nach der Eingabe eines Branchennamens als Erkennungsergebnis zwei ähnlich klingende Branchennamen ausgeben, wobei die beiden Spracherkennungsergebnisalternativen dann entsprechend ihrer Zuverlässigkeit geordnet sind. Wenn in der Datenbank 9 nun in den dort abgelegten Zuorclnungtabellen für die beiden als Spracherkennungsergebnisalternativen ermittelte Branchennamen unterschiedliche Zuordnungen für die Anpassung des Lexikons 6 vorgesehen sind, so werden diese bei der Anpassung des Lexikons 6 mit berücksichtigt.

## Patentansprüche

1. Verfahren zum Ermitteln von Datenbankeinträgen einer Datenbank (9) mittels eines automatischen Dialogsystems(1) , bei dem folgende Schritte vorgesehen sind:
1.1 Zwischenspeicherung einer Spracheingabe,
1.2 Verarbeitung der Spracheingabe mittels eines automatischen Spracherkenners (4) und Erzeugung eines Spracherkennungsergebnisses unter Verwendung eines ersten Lexikons (6), das einen ersten Satz von Lexikoneinträgen aufweist, wobei ein Lexikoneintrag jeweils mindestens eine akustische Referenz enthält,
1.3 Suche nach einem zum Spracherkennungsergebnis konespondienenden Datenbankeintrag.
1.4 für den Fall, dass in Schritt 1.3 kein Datenbankeintrag gefunden wurde,
- Erweiterung des ersten Lexikons (6), so dass das erste Lexikon (6) einen zweiten Satz von Lexikoneinträgen aufweist, der sich bezüglich mindestens eines Lexikoneintrags vom ersten Satz von Lexikoneinträgen unterscheidet,
- Wiederholung der Schritte 1.2 und 1.3 unter Verwendung der zwischengespeicherten Sprachäußerung und des angepassten ersten Lexikons (6).

2. Verfahren nach Anspruch 1,
**dadurch gekennzeichnet,**
**dass** die Lexikoneinträge einem zweiten Lexikon (7) entnommen werden, das als Gesamt-Lexikon dient.

3. Verfahren nach Anspruch 1 oder 2,
**dadurch gekennzeichnet,**
**dass** die Schritte 1.2 bis 1.4 solange wiederholt wird, bis ein Abbruchkriterium erfüllt ist.

4. Verfahren nach einem der Ansprüche 1 bis 3,
**dadurch gekennzeichnet,**
**dass** Kategorien von Lexikoneinträgen vorgesehen sind, die Kategorien von Datenbankeinträgen entsprechen und
**dass** das erste Lexikon nach einer Erweiterung in Bezug auf eine Kategorie von Lexikoneinträge in mindestens einem Lexikoneintrag von seiner Form vor der Anpassung abweicht.

5. Verfahren nach einem der Ansprüche 1 bis 4,
**dadurch gekennzeichnet,**
**dass** Kategorien von Lexikonemträgen vorgesehen sind, die Kategorien von Datenbankeinträgen entsprechen,
**dass** mindestens einer Kategorie von Lexikaneinträgen, von denen das erste Lexikon vor einer Anpassung mindestens eine Teilmenge enthält, eine andere Kategorie von Lexikoneinträgen zugeordnet ist, von denen das erste Lexikon nach der Erweiterung mindestens eine Teilmenge enthält.

6. Verfahren nach einem der Arehiche 1 bis 5,
**dadurch gekennzeichnet**
**dass** ein vom Spracherkenner geliefertes Spracherkennungsergebnis eine Menge N bester Erkennungsergebnisalternativen mit N ≥ 1 enthält und
**dass** die Erweiterung des Lexikons von mindestens einer Erkennungsergsbnisalternative abhängt.

7. Verfahren nach einem der Ansprüche 1 bis 6,
**dadurch gekennzeichnet,**
**dass** die Datenbankeinträge Teil einer Gelbe-Seiten-Datensammlung sind.

8. Verfahren nach einem der Ansprüche 1 bis 7,
**dadurch gekennzeichnet,**
**dass** das Dialogsystem eine Telefonschnittstelle (2) aufweist, über die Spracheingaben und Sprachausgaben überttagen werden.

9. Automatisches Dialogsystem (1) zum Ermitteln von Datenbankeinträgen einer Datenbank (9) mit Systemkomponenten zur Durchführung folgender Schritte:
9.1 Zwischenspeicherung einer eingebenden Sprachäußerung.
9.2 Verarbeitung der Sprachaüßerung mittels eines automatische Spracherkenners (4) und Erzeugung eines Spracherkennungsergebnisses unter Verwendung eines ersten Lexikons (6), das einen ersten Satz von Lexikoneinträgen aufweist, wobei ein Lexikoneintrag jeweils mindestens eine akustiche Referenz enthält,
9.3 Suche nach einem zum Spracherkennungsergebnis korrespondierenden Datenbankeintrag.
9.4 für den Fall, dass in Schritt 9.3 kein Datenbankeintrag gefunden wurde,
- Erweiterung des ersten Lexikons (6), so dass das erste Lexikon (6) einen zweiten Satz von Lexikoneinträgen aufweist, der sich bezüglich mindestens eines lexikoneintrags vom ersten Satz von Lexikoneinträgen unterscheidet,
- Wiederholung der Schritte 9.2 und 9.3 unter Verwendung der zwischengespeicherten Sprachäußerung und des angepassten ersten Lexikons (6).

## Claims

1. A method of determining database entries of a database (9) by means of an automatic dialog system (1) in which the following steps are provided:
1.1 buffering of speech input,
1.2 processing of the speech input by means of an automatic speech recognition device (4) and generation of a speech recognition result using a first lexicon (6) which has a first set of lexicon entries, where a lexicon entry contains at least one acoustic reference,
1.3 search for a database entry corresponding to the speech recognition result,
1.4 for the case where no database entry is found in step 1.3,
- extension of the first lexicon (6) so that the first lexicon (6) has a second set of lexicon entries which differs from the first set of lexicon entries by at least one lexicon entry,
- repetition of steps 1.2 and 1.3 using the buffered speech utterance and the adapted first lexicon (6).

2. A method as claimed in claim 1, **characterized in that** the lexicon entries,are taken from a second lexicon (7) which serves as an overall lexicon.

3. A method as claimed in claim 1 or 2, **characterized in that** the steps 1.2 to 1.4 are repeated until an interrupt criterion is fulfilled.

4. A method as claimed in any one of claims 1 to 3, **characterized in that** categories of lexicon entries are provided which correspond to categories of database entries and **in that** the first lexicon after extension with respect to a category of lexicon entries deviates from its form before adaptation in at least one lexicon entry.

5. A method as claimed in any one of claims 1 to 4, **characterized in that** categories of lexicon entries are provided which correspond to categories of database entries, and **in that** allocated to at least one category of lexicon entries, of which entries the first lexicon before adaptation contains at least a subset, a second category of lexicon entries is allocated of which entries the first lexicon after the extension contains at least a subset.

6. A method as claimed in any one of claims 1 to 5, **characterized in that** a speech recognition result supplied by a speech recognition device contains a number N of best recognition result alternatives with N ≥ 1, and **in that** the extension of the lexicon depends on at least one recognition result alternative.

7. A method as claimed in any one of claims 1 to 6, **characterized in that** the database entries are part of a Yellow Pages data collection.

8. A method as claimed in any one of claims 1 to 7, **characterized in that** the dialog system has a telephone interface (2) via which speech inputs and speech outputs are transmitted.

9. An automatic dialog system (1) for determining database entries of a database (9) with system components for carrying out the followings steps:
9.1 buffering of speech utterance to be input,
9.2 processing of the speech utterance by means of an automatic speech recognition device (4) and generation of a speech recognition result using a first lexicon (6) which has a first set of lexicon entries, where a lexicon entry contains at least one acoustic reference,
9.3 search for a database entry corresponding to the speech recognition result,
9.4 for the case where no database entry is found in step 9.3,
- extension of the first lexicon (6) so that the first lexicon (6) has a second set of lexicon entries which differ from the first set of lexicon entries by at least one lexicon entry,
- repetition of steps 9.2 and 9.3 using the buffered speech utterance and the adapted first lexicon (6).

## Revendications

1. Procédé d'interrogation d'enregistrements de base de données d'une base de données (9) à l'aide d'un système automatique de dialogue (1) dans lequel les étapes suivantes sont prévues :
1.1 Enregistrement intermédiaire d'une entrée de parole;
1.2 Traitement de l'expression de parole à l'aide d'un dispositif automatique de reconnaissance de la parole (4) et production d'un résultat de reconnaissance de la parole en utilisant un premier lexique (6) qui présente un premier jeu d'entrées de lexique, une entrée de lexique contenant respectivement au moins une référence acoustique;
1.3 Recherche d'une entrée de base de données correspondant au résultat de la reconnaissance de parole;
1.4 Au cas où, dans l'étape 1.3, aucune entrée de base de données n'a été trouvée,
- extension du premier lexique (6) de telle sorte que le premier lexique (6) présente un deuxième jeu d'entrées de lexique qui se distingue du premier jeu d'entrées de lexique par au moins une entrée de lexique,
- répétition des étapes 1.2 et 1.3 en utilisant l'expression de parole sauvée à titre intermédiaire et le premier lexique (6) adapté.

2. Procédé selon la revendication 1,
**caractérisé en ce**
**que** les entrées de lexique sont prélevées d'un deuxième lexique (7) qui sert de lexique complet.

3. Procédé selon l'une des revendications 1 ou 2,
**caractérisé en ce**
**que** les étapes 1.2 à 1.4 sont répétées jusqu'à ce qu'un critère d'interruption soit rempli.

4. Procédé selon l'une des revendications 1 à 3,
**caractérisé en ce**
**qu'**il est prévu des catégories d'entrées de lexique qui correspondent à des catégories d'entrées de base de données et
**que** le premier lexique diffère de sa forme avant l'adaptation dans au moins une entrée de lexique après une extension par rapport à une catégorie d'entrées de lexique.

5. Procédé selon l'une des revendications 1 à 4,
**caractérisé en ce**
**qu'**il est prévu des catégories d'entrées de lexique qui correspondent à des catégories d'entrées de base de données,
**qu'**il est affecté à au moins une catégorie d'entrées de lexique dont le premier lexique contient au moins une quantité partielle avant une adaptation, une autre catégorie d'entrées de lexique dont le premier lexique contient au moins une quantité partielle après l'extension.

6. Procédé selon l'une des revendications 1 à 5,
**caractérisé en ce**
**qu'**un résultat de la reconnaissance de parole délivré par le dispositif de reconnaissance de parole contient une quantité N de meilleures alternatives de résultat de reconnaissance avec N ≥ 1 et
**que** l'extension du lexique dépend d'au moins une alternative du résultat de reconnaissance.

7. Procédé selon l'une des revendications 1 à 6,
**caractérisé en ce**
**que** les entrées de base de données font partie d'une base de données de pages d'or.

8. Procédé selon l'une des revendications 1 à 7,
**caractérisé en ce**
**que** le système de dialogue présente une interface téléphonique (2) par l'intermédiaire de laquelle des entrées de parole et des sorties de parole sont transmises.

9. Système automatique de dialogue (1) pour déterminer des entrées de base de données d'une base de données (9) avec des composants de système pour l'exécution des étapes suivantes :
9.1 Enregistrement intermédiaire d'une expression de parole à introduire;
9.2 Traitement de l'expression de parole à l'aide d'un dispositif automatique de reconnaissance de la parole (4) et production d'un résultat de reconnaissance de la parole en utilisant un premier lexique (6) qui présente un premier jeu d'entrées de lexique, une entrée de lexique contenant respectivement au moins une référence acoustique;
9.3 Recherche d'une entrée de base de données correspondant au résultat de la reconnaissance de la parole;
9.4 Au cas où, dans l'étape 9.3, aucune entrée de base de données n'a été trouvée,
- extension du premier lexique (6) de telle sorte que le premier lexique (6) présente un deuxième jeu d'entrées de lexique qui se distingue du premier jeu d'entrées de lexique par au moins une entrée de lexique,
- répétition des étapes 9.2 et 9.3 en utilisant l'expression de parole sauvée à titre intermédiaire et le premier lexique (6) adapté.
